# EUROPEAN PATENT SPECIFICATION

(11) **EP 3 412 953 B1**
(45) Date of publication and mention of the grant of the patent: **02.12.2020**
(21) Application number: 18176606.4
(22) Date of filing: 07.06.2018
(51) Int. Cl.: F16L 13/14

(54) **PRESS FITTING HAVING A SUBSTANTIALLY V-SHAPED SPACER RING WITH AXIALLY EXTENDING CONTACT WALL PARTS AT OPPOSING SIDES OF A HOLLOW**
PRESSFITTING MIT EINEM IM WESENTLICHEN V-FÖRMIGEN DISTANZRING MIT AXIAL ERWEITERNDEN KONTAKTWANDTEILEN AN GEGENÜBERLIEGENDEN SEITEN EINER AUSHÖHLUNG
RACCORD À SERTIR AYANT UNE BAGUE D'ÉCARTEMENT SENSIBLEMENT EN FORME DE V COMPORTANT DES PARTIES DE PAROI DE CONTACT S'ÉTENDANT AXIALEMENT SUR LES CÔTÉS OPPOSÉS D'UNE CAVITÉ

(30) Priority: 09.06.2017 NL 2019041
(43) Date of publication of application: 12.12.2018
(73) Proprietor: VSH Fittings B.V., 1212 AA Hilversum (NL)
(72) Inventor: HULLEGIEN, Andreas Hubertus, 3451 BH VLEUTEN (NL); WALLENBURG, Nick, 1221 EN HILVERSUM (NL)
(74) Representative: EP&C

(56) References cited:
- WO-A1-00/28250
- WO-A1-99/49255
- NL-B1- 2 015 414

## Description

The present invention relates to press fittings for pipes which have sockets with compressible press regions such that pipe ends can be inserted therein after which the press fittings can be press fitted from a non-compressed state into a compressed state by means of a suitable pressing action exerted upon those press regions by complementary pressing tools.

Such press fittings are known in a wide variety of embodiments. For example WO 2010/089188 discloses a press fitting that comprises a socket with an annular groove-shaped space present inside a widened thin-walled press region. At its axial outward end the groove-shaped space is delimited by a plurality of interspaced inwardly projecting stop segments. At its axial inward end the groove-shaped space is delimited by a transitional wall part which extends between the insert region and press region. A sealing ring, a spacer ring and a gripping ring are placed side by side in the groove-shaped space. The spacer ring is used for fixing the gripping ring at its axial inward side and to keep sharp-edged grasping teeth of the gripping ring separated from the sealing ring. The spacer ring here is formed with a substantially rectangular cross-sectional profile, in other words as a disc-shaped ring with straight side walls facing the sealing ring and gripping ring. Furthermore, the spacer ring here is dimensioned such that both in the non-compressed state as well as in the compressed state it does not lie or come to lie against an outer circumferential wall of the pipe end. Both in the non-compressed state as well as in the compressed state, a space keeps on lying in between them.

A disadvantage here is that the spacer ring is difficult to deform and that the deformation behaviour of the spacer ring during a pressing action is rather unpredictable and thus may lead to the spacer ring and/or the sealing ring to get damaged. Another disadvantage is that the sealing ring during the pressing action deforms such that it gets to partially extend to inside said space in between the spacer ring and the pipe end. This enlarges the risk of the sealing ring getting damaged during a pressing action. Furthermore it is noted that, in cases of the sealing ring getting damaged during use, for example by getting burned in case of fire, said space which keeps on lying in between the spacer ring and the pipe end in the compressed state, immediately may result in large amounts of possibly dangerous transportation gases or fluids being forcedly blown out of the press fitting via the press region. In case of highly combustible media being transported through the pipes this may lead to very dangerous situations.

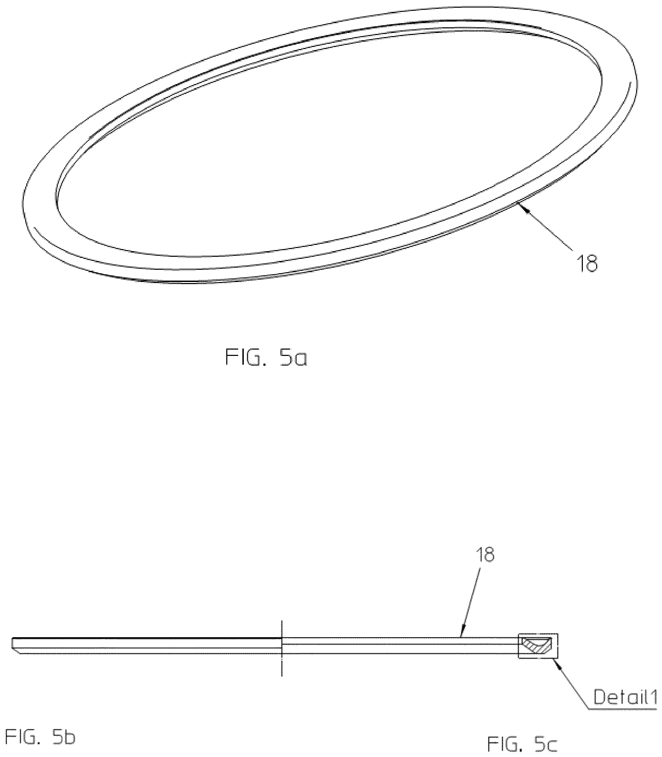

Another example of a press fitting is disclosed in DE 10 2004 044 226. Here the press fitting comprises a socket with an annular groove-shaped space inside which a sealing ring, a spacer ring and a gripping ring are placed side by side. In an embodiment as shown in fig. 5a the spacer ring has a substantially rectangular cross-sectional profile with a concave hollow at the side of the sealing ring, in other words it is constructed disc-shaped with a flat circumferential side wall that faces the gripping ring and a concavely hollowed circumferential groove that faces the sealing ring. It is foreseen here that in the pressed state the spacer ring comes to lie over its entire circumference against an outer circumferential wall of the inserted pipe end as well as against an inner circumferential wall of the socket. Thus it is aimed to have the spacer ring form a sort of back-up blocking wall in the pressed state for cases that the sealing ring gets damaged during use.

A disadvantage here is that the spacer ring is difficult to deform during a pressing action. Thus a high pressing force is required for having the spacer ring getting deformed in such a degree that it is able to form the aimed back-up blocking wall between the inserted pipe end and socket. The high pressing force together with the high resistance of the spacer ring against deformation, however makes it rather unpredictable how the spacer ring is actually going to deform during a pressing action. This makes it uncertain when and if the spacer ring truly has gotten deformed in the aimed manner. In practice it may well appear that the spacer ring has not gotten deformed far enough, such that a space has remained present between the spacer ring and for example the outer circumferential wall of the inserted pipe end. It may however also appear that the spacer ring has gotten deformed too far, such that it has started to wave in unpredictable directions while causing local openings to appear again between the spacer ring and for example the outer circumferential wall of the inserted pipe end. All in all this may still lead to large amounts of possibly dangerous transportation gases or fluids being forcedly blown out of the press fitting via the press region, in cases of the sealing ring getting damaged during use.

From a brochure with the title "Megapress with SC-Contur" in the name of the same applicant as the one of the abovementioned WO 2010/089188 and DE 10 2004 044 226 another spacer ring is known for a press fitting called Megapress®. This spacer ring is characterized by a substantially V-shaped cross-sectional profile with a radially inner and a radially outer leg that together delimit a concave hollow that opens out sideways towards the sealing ring. The legs have different lengths, that is to say the inner leg is longer than the outer leg. The inner and outer legs each have axially extending contact wall parts onto which radially directed pressing forces get exerted during pressing of the fitting.

Although this spacer ring is more easily deformable than the spacer rings according to WO 2010/089188 and DE 10 2004 044 226, its deformation behaviour still leaves to be improved. Firstly it has appeared that this spacer ring during pressing has a tendency to tilt and/or kink caused by the pressing forces exerted thereon. A tilting, however, makes it unpredictable if and how the contact wall parts of the spacer ring come to lie relative to a cylindrical outer wall of an inserted pipe end respectively relative to a cylindrical press wall part of the fitting. The same goes for a kinking of the spacer ring. The tilting and/or kinking thus may lead to circumferential spaces and/or local openings remaining present, in the pressed state, between the spacer ring and the inserted pipe end or fitting. Via those spaces and/or openings large amounts of possibly dangerous transportation gases or fluids may get forcedly blown out of the press fitting, in the case that the sealing ring has gotten damaged during use. During pressing, the tilting of the spacer ring furthermore may lead to the sealing ring getting forced away from the inserted pipe end, which has an immediate negative effect on the sealing function of the sealing ring itself relative to this inserted pipe end. During pressing, the kinking of the spacer ring furthermore may lead to the sealing ring getting somewhat jammed between the inner and outer legs, which also may have an immediate negative impact on the sealing function of the sealing ring itself. Furthermore, it is disadvantageous that with this spacer ring the free end of the inner leg is constructed sharp edged. This may lead to an undesired damaging of the sealing ring which during pressing may have a tendency to start extruding over that sharp edge into the circumferential space that at that moment is still available between the inserted pipe end and the spacer ring.

The present invention aims to at least partially overcome the above disadvantages or to provide a usable alternative. In particular the present invention aims to provide a user-friendly reliable press fitting with a spacer ring that is able to offer a predictable and reliable aimed deformation behaviour during a pressing action.

This aim is achieved by a press fitting according to claim 1. The press fitting comprises a socket with an insertion space for having a pipe end inserted therein. The insertion space has a press region which is delimited by a substantially cylindrical press wall part. An annular groove-shaped space is present in the press wall part. A sealing ring, a spacer ring and a gripping ring are placed in the annular groove-shaped space. The spacer ring is made as a separate distinctive component, that is not integral with the gripping ring, making it possible for the spacer ring and gripping ring to independently move/deform from each other. The spacer ring lies in between the sealing ring and the gripping ring. The press region is plastically deformable from a non-compressed state towards a compressed state during a radially inward directed pressing action exerted by a press tool causing the press wall part to radially compress and the gripping ring to grip an inserted pipe end while the sealing ring lies sealing against this inserted pipe end. The spacer ring has a substantially V-shaped cross-sectional profile with an inner and an outer leg that together delimit a hollow that opens out towards the sealing ring. The inner leg comprises an inner contact wall part that extends in an axial direction and that faces the insertion space. The outer leg comprises an outer contact wall part that extends in the axial direction and that faces the substantially cylindrical press wall part of the socket. According to the inventive thought the inner and outer contact wall parts are positioned such that they both start substantially at a same level seen in the axial direction at the side of the sealing ring and such that they lie opposite each other at opposing sides of the hollow, while at least one of the inner and outer contact wall parts has an axial length that is equal to or shorter than a depth of the hollow seen in the axial direction.

Thus according to the invention a press fitting is provided which can be pressed more easily and reliably without requiring high pressing forces for this. The pressed fitting is able to perfectly seal the socket and the inserted pipe end relative to each other by means of the sealing ring, and at a same time is also able to substantially seal the socket and the inserted pipe end relative to each other by means of the spacer ring. Should the sealing ring for whatever reason get damaged during use, then the spacer ring is able to perform a reliable back-up sealing function instead. This is owed to the fact that the improved spacer ring according to the invention now advantageously is able to deform in a predictable manner without having a tendency to tilt and/or kink and without requiring high pressing forces. The specific constructional design choices for the spacer ring construction together make this possible. This makes the press fitting for example optimally usable in a gas installation or the like, where a certain degree of closure/sealing now can be maintained under all circumstances by the spacer ring, even when the sealing ring may have been burned away.

The positioning of the contact wall parts at substantially a same level at the side of the sealing ring in combination with the positioning of the contact wall parts at opposing sides of the hollow in combination with the extending of at least one of the contact wall parts along merely a part of the depth of the hollow, has a number of advantageous effects which together provide the spacer ring with its aimed deformation behaviour during and after pressing. In particular, those features together:
- prevent the spacer ring to start tilting or kinking during pressing of the fitting;
- keep the sealing ring separated from the gripping ring during pressing of the fitting while helping the sealing ring to obtain an optimum sealing position;
- cause the contact wall parts to be pressed easily and flexibly towards each other during pressing;
- cause the legs to spring somewhat back after the pressing such that the contact wall parts keep on lying against the inserted pipe end and press wall part of the socket when the socket relaxates somewhat after the pressing force has been take away;
- cause the contact wall parts to be able to maintain their axially directed orientation during and after pressing of the fitting such that long sealing surfaces are obtained between the spacer ring and the inserted pipe end and press wall part of the socket;
- make the legs of the spacer ring somewhat elastically deformable even when made out of relative hard material like a metal composition; and
- make it possible for the legs to gradually bend towards each other during a pressing action, without kinking and without this requiring high pressing forces.

All in all this specific deformation behaviour that is made possible by the invention, and in particular by its new spacer ring design, is well able to provide the press fitting with a superb sealing function of its sealing ring during normal use and with a good back-up sealing function of its spacer ring should the sealing ring for whatever reason get damaged during use.

The height of the cross-sectional profile of the spacer ring preferably is such that in the compressed state the inner leg lies all around with its inner contact wall part substantially against an inserted pipe end and the outer leg lies all around with its outer contact wall part substantially against the press wall part. Thus, in the compressed state, the legs together form a blocking wall inside the press region by fully extending in between the pipe end and the press wall part. The deformability of the legs of the spacer ring such that they are able to form a blocking wall inside the press region, offers important advantages to the pressing behaviour of the press fitting as well as for the reliability of the fitting during use. First of all, the spacer ring now is able to truly follow the compression of the press wall part without getting damaged itself. The spacer ring no longer gets forced to start deforming in a rather unpredictable manner. It simply can reduce the distance between its legs along with the reducing press region during a pressing action of the press fitting. This has the advantage that the spacer ring both in the non-compressed state as well as in the compressed state, can keep on limiting a substantially uniform space for the sealing ring to lie inside.

The press fitting according to the invention has the pressing action exerted by a pressing tool. This pressing tool gets placed around the press fitting merely during the pressing action itself and gets removed again from the press fitting as soon as the compressed state has been achieved. Furthermore the press fitting according to the invention has the pressing action result in a plastic deformation of the press wall part, such that it is able to maintain the compressed state of the press fitting, including that of the gripping and spacer ring, after the press tool has been removed again as soon as the compressed state has been achieved.

It is noted that NL2015414 discloses in its fig. 8 variant a press fitting that comprises a spacer ring that has a sharp-edged V-shaped cross-sectional profile with an inner and an outer leg that together delimit a hollow that opens out towards a sealing ring.

In this NL2015414 the spacer ring however has its free outer end walls of the legs extend under slanted angles relative to the axial direction of the fitting, which slanted angles, during pressing of the fitting, shall even get larger, thus minimizing contact areas with the socket and inserted pipe end respectively. No inner and outer contact wall parts are present here that extend in the axial direction.

Furthermore it is noted that the spacer ring in this NL2015414 is a helical wound split ring with overlapping windings, which increase their overlap when radially compressed during pressing of the fitting such that an inner and outer diameter of the spacer ring decrease. With such a helical wound split spacer ring it may however under some circumstances sometimes appear that, after the fitting has been pressed, the respective windings of the helically wound split spacer ring no longer lie against each other, but have been forced away from each other somewhat in the axial direction. This then may cause a helical leakage path to be formed via which medium may get to leak out of the press fitting.

According to the present invention the spacer ring is not split, but instead is an endless spacer ring with an endless ring-shaped body that is closed in the circumferential direction, and that preferably also may have an uninterrupted continuous cross-sectional profile all around its circumference. This is advantageous because it helps to guarantee that the legs of the spacer ring shall perform their desired and aimed deformation behaviour during pressing and relaxation of the fitting.

In a preferred embodiment free ends of the inner and outer legs may lie at substantially a same level seen in the axial direction. This advantageously adds axial stability to the spacer ring. Preferably the free ends of the legs are convexly curved at transitions between the contact wall parts and the hollow. This helps to prevent the sealing ring from getting damaged even when it comes to lie against or tries to extrude along those free leg ends.

In another embodiment the inner or outer contact wall part may have an axial length that is shorter than the other one. Thus it can be guaranteed that a focussing of pressing forces is going to take place on this shorter contact wall part during pressing. Furthermore this makes it possible for the longer contact wall part to even be made longer than the depth of the hollow, without this leading to an undesired tilting or kinking of the spacer ring, while at a same time offering a larger sealing surface for that longer contact wall part. It is noted that this feature of different axial lengths of the axially extending contact wall parts of the legs goes both in the non-pressed and pressed state.

In a further embodiment the leg of which the contact wall part has the shorter length at least partly can be constructed more slender than the other leg. This offers this leg more flexibility to plastically/elastically deform during pressing and elastically deform somewhat back towards its starting position after the pressing has been completed.

The hollow can have all kinds of shapes. Preferably however the hollow comprises an at least partly concavely curved wall section. Thus for example a circular side part of the sealing ring that faces the hollow can come to lie inside and/or against the hollow. Furthermore the concavely curved shape prevents the spacer ring from having a tendency to kink which would be more likely if the hollow would be shaped with for example sharp transitions.

In a further embodiment a radius of the concavely curved wall section preferably lies between 0.8-1.5 mm. At a radius larger than 1.5 mm the chance for tilting or kinking of the spacer ring has appeared to be larger, whereas at a radius smaller than 0.8 mm the spacer ring has appeared to not deform uniformly enough causing the spacer ring to start kinking too much.

In addition thereto or in the alternative the hollow may comprise a straight wall section along part of one of the legs, which straight wall section extends under an oblique angle relative to the radial direction, and which straight wall section in particular lies parallel to an outer straight wall part of that leg that also extends under an oblique angle relative to the radial direction. This makes the spacer ring, and in particular the hollow thereof more easy to manufacture and may provide that leg section with a substantially uniform thickness.

Preferably the spacer ring is equipped with a side wall part at a transition between the first and second legs, which side wall part substantially extends in the radial direction and faces the gripping ring. Thus the spacer ring and gripping ring can come to lie against each other in a stable position.

The spacer ring can be made out of all kinds of materials, in particular metal compositions. In a preferred embodiment the spacer ring is made out of brass, in particular brass containing lead, more in particular brass containing about 2% lead. This makes it possible to more quickly and cost-efficiently manufacture the spacer ring by means of a machining operation during which material is removed.

Further preferred embodiments of the press fitting are stated in the subclaims.

The invention also relates to a method for pressing a press fitting according to claim 12.

The invention shall be explained in more detail below with reference to the accompanying drawings, in which:
- Fig. 1 shows a sectional view of a press fitting according to the invention in a non-compressed state having a pipe end inserted therein and part of a pressing tool ready for pressing;
- Fig. 2 is an enlarged partial view of fig. 1;
- Fig. 3a-d respectively show a perspective, side, cross-sectional and enlarged partial cross-sectional view of the spacer ring of fig. 1 and 2;
- Fig. 4 and 4a are views according to fig. 1 and 2 in a compressed state;
- Fig. 5a-d respectively show a first variant of the spacer ring in a perspective, side, cross-sectional and enlarged partial cross-sectional view; and
- Fig. 6a-d respectively show a second variant of the spacer ring in a perspective, side, cross-sectional and enlarged partial cross-sectional view.

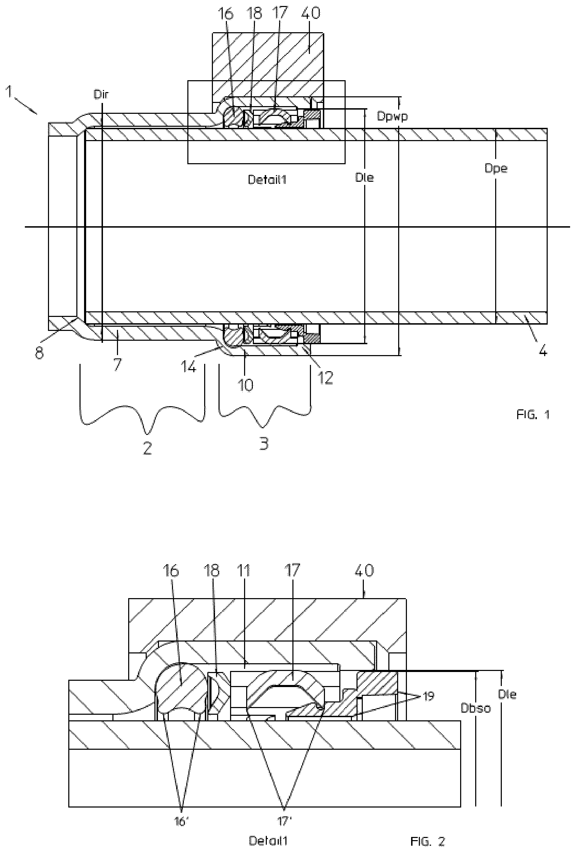

The press fitting comprises a steel socket which has been given the reference numeral 1 in fig. 1. The socket 1 comprises an insert region 2 and a press region 3. A pipe end 4 has been inserted into an insertion space of the insert and press regions 2, 3.

The insert region 2 is delimited by a substantially cylindrical insert wall part 7 which has an inner diameter Dir which is slightly larger than an outer diameter Dpe of the pipe end 4, such that the pipe end 4 could be easily inserted therein until it came to abut against an abutment edge 8.

The press region 3 is formed by a substantially cylindrical press wall part 10. This press wall part 10 forms a widened section relative to the insert wall part 7. Inside the press wall part 10, a groove-shaped space 11 is present. See in particular fig. 2. The groove-shaped space 11 has been manufactured in the press wall part 10 by means of a machining operation in which metal has been removed from the inside of the press wall part 10. With this the press wall part 10 before machining had a substantially same wall thickness as the insert wall part 7, but after machining has a reduced wall thickness compared thereto. The machining operation has been performed over almost the entire length of the press region 3. Only at the free end of the press region 3 the machining operation has not taken place such that a radially inwardly projecting edge 12 is formed there. This edge 12 delimits the groove-shaped space 11 towards a free end of the socket 1. At an axial inward side the groove-shaped space 11 is delimited by a transitional wall part 14 which extends between the insert wall part 7 and the press wall part 10.

In the groove-shaped space 11 a sealing ring 16 and a gripping ring 17 are placed. A separate distinctive spacer ring 18 is placed in between the sealing ring 16 and the gripping ring 17. Furthermore a check ring 19 has been clicked onto the gripping ring 17.

The sealing ring 16 here is formed by an O-ring with two radially inwardly projecting circumferential ridges 16'. Between those ridges 16' a concave hollow is present. The ridges 16' give the sealing ring 16 sideways stability against rolling during assembly. Furthermore they make it possible for the sealing ring 16 to properly seal against irregularities which might be present on the inserted pipe end 4. Finally they give the sealing ring 16 more volume compared to a conventional O-ring and thus more stability and sealing capacities.

The gripping ring 17 is equipped with two rows of pairs of grasping teeth 17'. Each pair has oppositely slanting grasping teeth 17'. The grasping teeth are slanted outwards away from each other. This has the advantage that the most important row of teeth 17', that is to say the one which points slanted inwards and thus needs to prevent that the pipe end 4 can be pulled out of the socket 1, lies at a greater distance of the free outer end of the socket 1 compared to the other row of teeth 17', that is to say where the socket 1 is stronger.

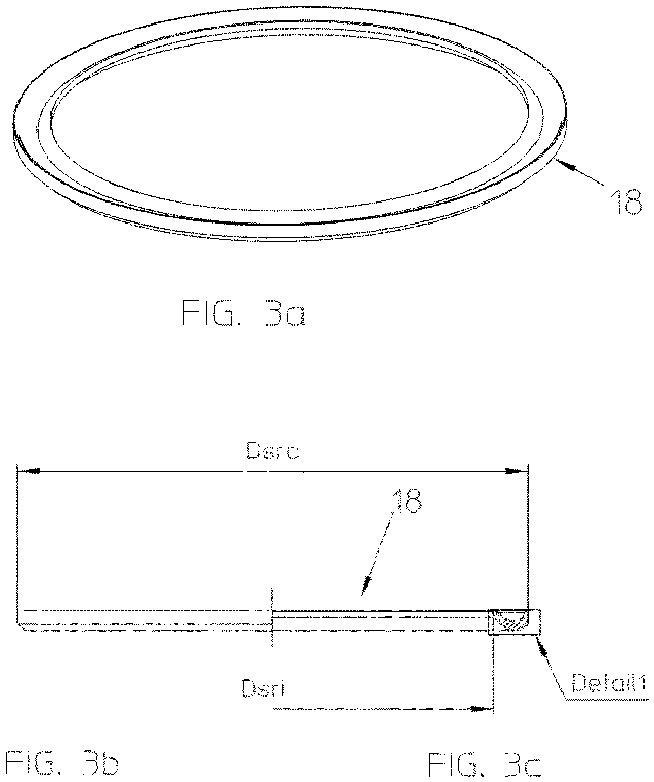

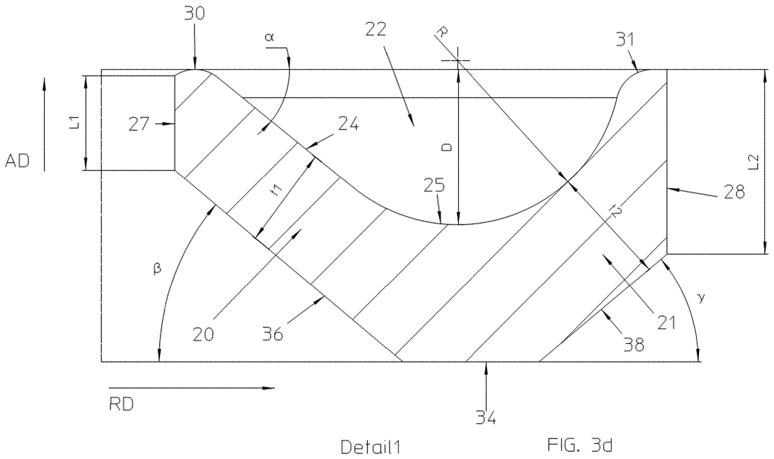

According to the invention the spacer ring 18 is formed with a specific cross-sectional profile that shall now be explained with respect to fig. 3.

The spacer ring 18 has a substantially V-shaped cross-sectional profile with an inner leg 20 and an outer leg 21. At their inner sides the legs 20, 21 together delimit a hollow 22 that opens out towards the sealing ring 16.

The hollow 22 comprises a straight wall section 24 along part of the inner leg 20, and a concavely curved wall section 25 that extends along the remaining part of the inner leg 20 as well as along the outer leg 21. The curved wall section 25 has a radius R of approximately 0.9 mm. The transition between the straight and curved wall sections 24, 25 is gradual because at their transition, the straight wall section 24 extends substantially tangentially to the curved wall section 25 as well as under an oblique angle α relative to the radial direction RD, in particular an angle of approximately 39°.

The inner leg 20 comprises an inner contact wall part 27 that extends in the axial direction AD and that faces the pipe end 4. The outer leg 21 comprises an outer contact wall part 28 that also extends in the axial direction AD and that faces the press wall part 10.

A free end 30 of the inner leg 20 is convexly curved at a transition between the inner contact wall part 27 and the straight wall section 24. A free end 31 of the outer leg 21 is convexly curved at a transition between the outer contact wall part 28 and the curved wall section 25. The free ends 30, 31 lie at a same level seen in the axial direction AD.

At a side of the spacer ring that lies opposite the hollow 22 and that faces the gripping ring 17, a side wall part 34 is provided. This side wall part 34 extends in the radial direction RD and lies against the gripping ring 17.

The inner leg 20 comprises a straight wall part 36 that extends under an oblique angle β relative to the radial direction RD, in particular an angle of approximately 40°, and that extends between the side wall part 34 and the inner contact wall part 27. The straight wall part 36 lies substantially parallel to the straight wall section 24 of the hollow 22.

The outer leg 21 also comprises a straight wall part 38 that extends under an oblique angle γ relative to the radial direction RD, in particular an angle of approximately 40°, and that extends between the side wall part 34 and the outer contact wall part 28.

As can be seen in fig. 3 the inner and outer contact wall parts 27, 28 both start at the side of the sealing ring 16 substantially at the same level seen in the axial direction AD. Furthermore it can be seen that they lie opposite each other at opposing sides of the hollow 22. The inner contact wall part 27 has an axial length L1 that is shorter than a depth D of the hollow 22, in particular more than 20% shorter. The outer contact wall part 28 has an axial length L2 that is longer than the depth D of the hollow 22, in particular more than 20% longer. As can also be seen in fig. 3, the inner leg 20 with a thickness of approximately t1 is constructed more slender than the outer leg 21 which has a minimum thickness t2, in particular more than 10% more slender.

The press fitting with the pipe end 4 inserted therein is shown in fig. 1 in its non-compressed state. In this non-compressed state, inner diameters of the sealing ring 16, gripping ring 17, spacer ring 18 and check ring 19 are slightly larger than an outer diameter Dpe of the pipe end 4, such that the pipe end 4 could be easily inserted therein until it came to abut against the abutment edge 8. In the embodiment shown, the spacer ring 18 in this non-compressed state lies with an outer contact wall part free from the machined press wall part 10. It may however also lie somewhat pre-biased against it.

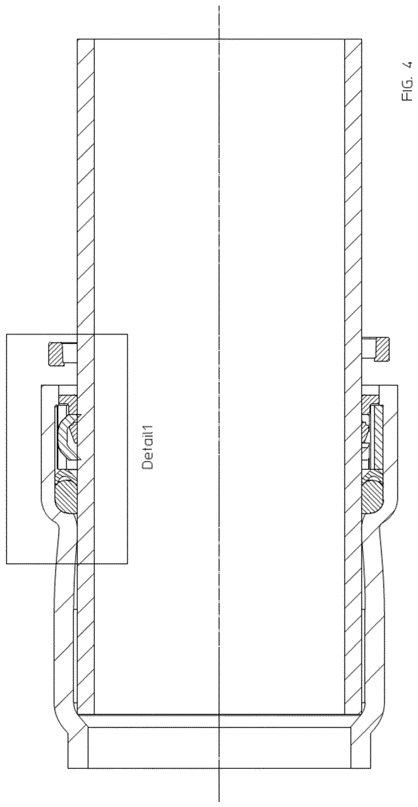

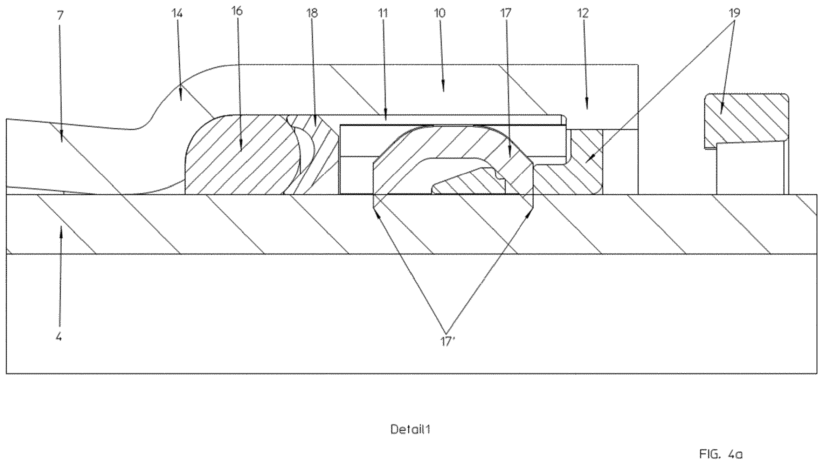

The press region 3 of the press fitting of fig. 1 can now be compressed from the non-compressed state into the compressed state by means of a press tool 40. This press tool 40, of which only a part has been schematically shown in fig. 1 and 2, is designed to exert a radially inward directed pressing action on the outer side of the press wall part 10. Because of this the press wall part 10 starts to deform and gets radially compressed to a smaller diameter. This can clearly be seen when comparing fig. 2 and 4. In the compressed state the gripping ring 17 has gotten to grip with its grasping teeth 17' into the pipe end 4. The sealing ring 16 has gotten deformed such that it substantially fills up the entire space between the pipe end 4, the transitional wall part 14, the press wall part 10 and the spacer ring 18.

Furthermore, during the deforming of the press region 3, the spacer ring 18, and in particular the legs 20, 21 thereof, get forced to deform. In the situation shown in fig. 4, the inner diameter Dsri of the spacer ring 18, that is to say the diameter of its inner contact wall part 27, as well as the outer diameter Dsro of the spacer ring 18, that is to say the diameter of its outer contact wall part 28, have decreased during the pressing action because of the free ends of the legs 20, 21 having been moved towards each other. Owing to this bending of the legs 20, 21 towards each other, the spacer ring 18 in the compressed state has come to lie with its inner and outer contact wall parts 27, 28 against both the pipe end 4 and the press wall part 10.

As soon as the pressing tool 40 is removed at the end of the pressing action, the press wall part 10 is deemed to undergo a slight amount of relaxation. Owing to biasing forces inside the legs 20, 21 of the spacer ring 18, those legs 20, 21 advantageously are able to slightly spring back and thus keep on having their contact wall parts 27, 28 substantially lying both against the pipe end 4 and the press wall part 10.

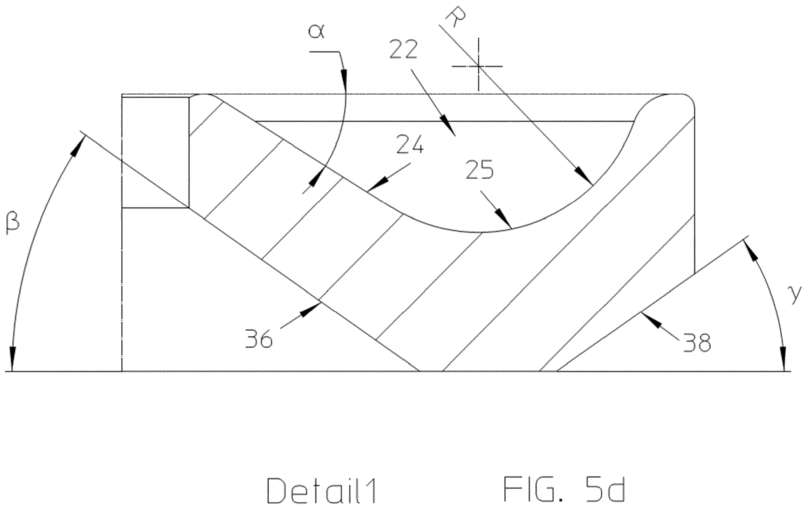

In fig. 5 a first variant of the spacer ring is shown which is destined for a larger dimensioned press fitting, in particular one that is about twice as large. Similar parts have been given same reference numerals. It can be seen that the cross-sectional profile of the spacer ring 18 has remained substantially the same. The main differences are that:
- the curved wall section 25 of the hollow 22 now has a larger radius R, in particular a radius of approximately 1.2 mm;
- the straight wall section 24 of the hollow 22 now extends under a less steep oblique angle α relative to the radial direction RD, in particular an angle of approximately 32°;
- the straight wall part 36 of the inner leg 20 now extends under a less steep oblique angle β relative to the radial direction RD, in particular an angle of approximately 35°; and
- the straight wall part 38 of the outer leg 21 now extends under a less steep oblique angle γ relative to the radial direction RD, in particular an angle of approximately 35°.

Together this causes this first variant of the spacer ring 18 to be somewhat less compact in the axial direction, because of the legs 20, 21 being less steep.

It is noted that the more compact spacer ring of fig. 3 is specifically destined to be used for smaller dimensioned press fittings and/or for situations where press tools are used that comprise merely two jaw segments. Because of this the fitting at first instance get pressed towards an oval shape and only thereafter back to a substantially round shape. Thus a waving of the spacer ring in the circumferential direction can be prevented. In line herewith, the less compact spacer ring of fig. 5 is specifically destined to be used for larger dimensioned press fittings and/or for situations where press tools are used that comprise three or more jaw segments. Because of this the pressing of the fitting can develop more gradually.

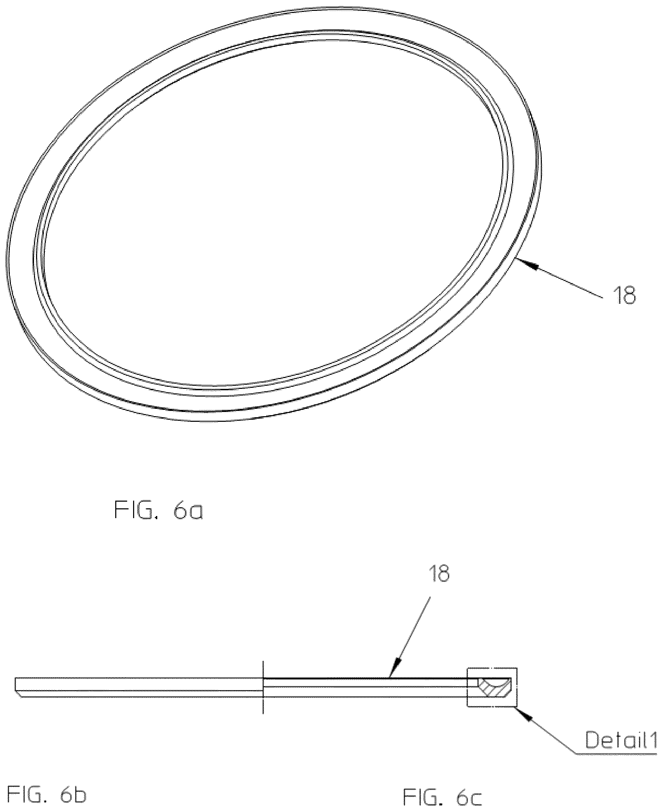

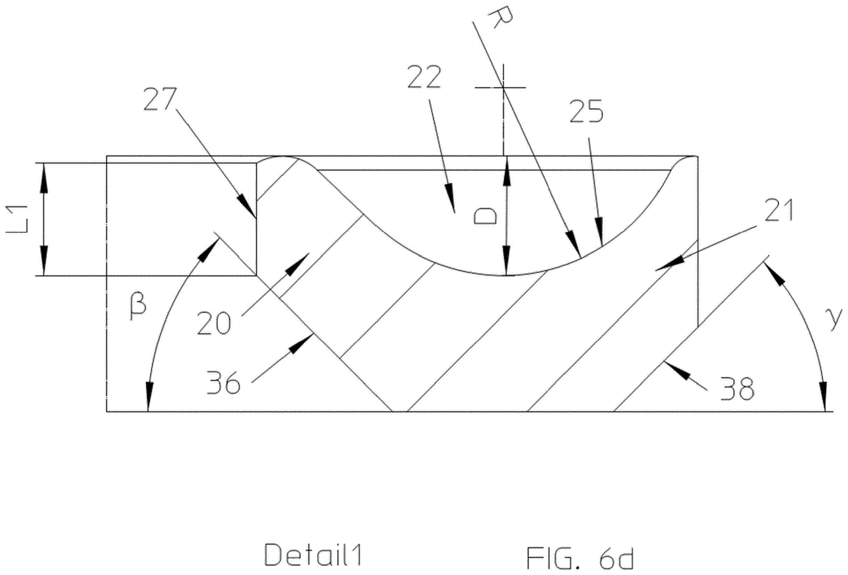

In fig. 6 a second variant of the spacer ring is shown. Similar parts have again been given same reference numerals. It can be seen that the cross-sectional profile of the spacer ring 18 now has changed to a more symmetrical one. The main differences are that:
- the hollow 22 now only comprises a concavely curved wall section 25 and no longer also comprises a straight wall section;
- the curved wall section 25 of the hollow 22 now has a radius R of approximately 1.1 mm;
- the straight wall part 36 of the inner leg 20 now extends under an oblique angle β relative to the radial direction RD of approximately 45°;
- the straight wall part 38 of the outer leg 21 now extends under an oblique angle γ relative to the radial direction RD of approximately 45°;
- the inner contact wall part 27 now has an axial length L1 that is substantially the same as the depth D of the hollow 22; and
- the legs 20 and 21 now have substantially same minimum thicknesses and thus are substantially equally slender.

Together this causes the spacer ring 18 to be able to more uniformly deform during a pressing action, because of the legs 20, 21 being more similar to each other. This is advantageous/important because this causes the spacer ring to be "folded double" to a lesser amount. Because of this the spacer ring forms a larger opening in which the rubber sealing ring under the influence of pressure in the piping system can come to lie. Thus even after long periods of time the sealing functioning of the sealing ring can remain such that it does not lead to failure.

Besides the embodiments shown numerous variants are possible within the scope of the claims. For example the types, shapes and dimensions of the sealing ring and gripping ring can be changed within the scope of the claims. The endless spacer ring can also be given other cross sectional shapes and dimensions, and can be made out of other materials within the scope of the claims. Instead of the groove-shaped space being machined into the socket it can also be formed by a widened wall part with an inwardly flared outer edge. The socket can be closed at the side of the insert region, or be provided with means for connecting a pipe end or the like thereto. For example it can also be equipped with a second set of a press and insert region according to the invention for inserting and connecting another pipe end thereto in a similar manner as described above. The gripping ring can also be provided with other means for gripping into or onto the pipe end, and for example may also comprise merely one row of grasping teeth or the like.

Thus the invention provides a press fitting according to the claims which can easily be assembled and which after a pipe end has been inserted into it, can easily and reliably be pressed into a compressed state in which not only the sealing ring but also the spacer ring add in properly sealing the socket relative to the pipe end and keeping it sealed.

## Claims

1. Press fitting for pipes, comprising:
- a socket (1) with an insertion space for having a pipe end (4) inserted therein, the insertion space having a press region (3) which is delimited by a substantially cylindrical press wall part (10);
- an annular groove-shaped space (11) present in the press wall part (10); and
- a sealing ring (16), a spacer ring (18) and a gripping ring (17) placed in the annular groove-shaped space (11),
in which the press region (3) is plastically deformable from a non-compressed state towards a compressed state during a radially inward directed pressing action exerted by a press tool (40) causing the press wall part (10) to radially compress and the gripping ring (17) to grip an inserted pipe end (4) while the sealing ring (16) lies sealing against this inserted pipe end (4), in which the spacer ring (18) has a substantially V-shaped cross-sectional profile with an inner and an outer leg (20, 21) that together delimit a hollow (22) that opens out towards the sealing ring (16),
**characterized in that,**
the spacer ring (18) is an endless spacer ring with an endless ring-shaped body that is closed in the circumferential direction,
in which the inner leg (20) comprises:
- an inner contact wall part (27) that extends in an axial direction (AD) and that faces the insertion space,
in which the outer leg (21) comprises:
- an outer contact wall part (28) that extends in the axial direction (AD) and that faces the substantially cylindrical press wall part (10) of the socket (1),
wherein the inner and outer contact wall parts (27, 28) both start at the side of the sealing ring (16) substantially at a same level seen in the axial direction (AD) and lie opposite each other at opposing sides of the hollow (22),
wherein at least one of the inner and outer contact wall parts (27) has an axial length (L1) that is equal to or shorter than a depth (D) of the hollow (22) seen in the axial direction (AD).

2. Press fitting according to claim 1, wherein free ends (30, 31) of the inner and outer legs (20, 21) lie at substantially a same level seen in the axial direction (AD).

3. Press fitting according to claim 1 or 2, wherein the inner or outer contact wall part (27) has an axial length (L1) that is shorter than the other one (L2) of the inner and outer contact wall parts (28).

4. Press fitting according to claim 3, wherein the leg (20) of which the contact wall part (27) has the shorter length (L1) at least partly is constructed more slender than the other leg (21).

5. Press fitting according to claim 3 or 4, wherein the contact wall part (28) that has the longer axial length (L2), has an axial length (L2) that is longer than the depth (D) of the hollow (22).

6. Press fitting according to one of the preceding claims, wherein free ends (30, 31) of the legs (20, 21) are convexly curved at transitions between the contact wall parts (27, 28) and the hollow (22).

7. Press fitting according to one of the preceding claims, wherein the hollow (22) comprises an at least partly concavely curved wall section (25).

8. Press fitting according to claim 7, wherein a radius (R) of the concavely curved wall section (25) lies between 0.8-1.5 mm.

9. Press fitting according to one of the preceding claims, wherein the hollow (22) comprises a straight wall section (24) along part of one of the legs (20), which straight wall section (22) extends under an oblique angle (α) relative to the radial direction (RD), and which straight wall section (24) in particular lies substantially parallel to an outer straight wall part (36) of that leg (20) that also extends under an oblique angle (β) relative to the radial direction (RD).

10. Press fitting according to one of the preceding claims, wherein a side wall part (34) is provided at a transition between the first and second legs (20, 21), which side wall part substantially extends in the radial direction (RD) and faces the gripping ring (17).

11. Press fitting according to one of the preceding claims, wherein the spacer ring (18) is made out of brass, in particular brass containing lead, more in particular brass containing about 2% lead.

12. Method for pressing a press fitting according to one of the preceding claims 1-11, comprising the steps of:
- inserting a pipe end (4) in the insertion space of the socket (1);
- plastically deforming the press region (3) from a non-compressed state towards a compressed state by a radially inward directed pressing action exerted by a press tool (40) causing the press wall part (10) to radially compress and the gripping ring (17) to grip the inserted pipe end (4) while the sealing ring (16) lies sealing against the inserted pipe end (4), wherein, during the deforming of the press region (3), the cross-sectional profile of the spacer ring (18) gets deformed such that the inner and outer contact wall parts (27, 28) come to lie substantially against the inserted pipe end (4) and press wall part (10) respectively for having the spacer ring (18) form a blocking wall inside the press region (3) by fully extending in between the pipe end (4) and the press wall part (10) in the compressed state.

## Patentansprüche

1. Press-Fitting für Rohre, umfassend:
- eine Fassung (1) mit einem Einführungsraum, um ein Rohrende (4) aufzuweisen, welches darin eingeführt wird, wobei der Einführungsraum einen Pressbereich (3) aufweist, welcher durch ein im Wesentlichen zylindrisches Presswandteil (10) abgegrenzt ist;
- einen kreisförmigen aussparungsförmigen Raum (11), welcher in dem Presswandteil (10) vorhanden ist; und
- einen Dichtungsring (16), einen Abstandsring (18) und einen Greifring (17), welche in dem kreisförmigen aussparungsförmigen Raum (11) angeordnet sind,
wobei der Pressbereich (3) plastisch von einem nicht komprimierten Zustand in einen komprimierten Zustand während eines radial nach innen gerichteten Pressvorgangs verformbar ist, welcher durch ein Presswerkzeug (40) ausgeübt wird, was bewirkt, dass das Presswandteil (10) radial komprimiert wird und der Greifring (17) ein eingeführtes Rohrende (4) ergreift, während der Dichtungsrings (16) abdichtend an diesem eingeführten Rohrende (4) liegt, wobei der Abstandsring (18) ein im Wesentlichen V-förmiges Querschnittsprofil mit einem inneren und einem äußeren Bein (20, 21) aufweist, welche zusammen einen Hohlraum (22) begrenzen, welcher sich nach außen zu dem Dichtungsring (16) öffnet,
**dadurch gekennzeichnet.**
**dass** der Abstandsring (18) ein endloser Abstandsring mit einem endlosen ringförmigen Körper ist, welcher in der Umfangsrichtung geschlossen ist,
**dass** das innere Bein (20) umfasst:
- ein Wandteil (27) mit einem inneren Kontakt, welches sich in einer axialen Richtung (AD) erstreckt und zu dem Einführungsraum gerichtet ist,
**dass** das äußere Bein (21) umfasst:
- ein Wandteil (28) mit einem äußeren Kontakt, welches sich in der axialen Richtung (AD) erstreckt und zu dem im Wesentlichen zylindrischen Presswandteil (10) der Fassung (1) gerichtet ist,
wobei die Wandteile (27, 28) mit dem inneren und äußeren Kontakt beide an der Seite des Dichtungsrings (16) im Wesentlichen auf derselben Höhe in der axialen Richtung (AD) beginnen und sich einander an gegenüberliegenden Seiten des Hohlraums (22) gegenüberliegen,
wobei zumindest einer von den Wandteilen (27) mit dem inneren und äußeren Kontakt eine axiale Länge (L1) aufweist, welche gleich oder kürzer als eine Tiefe (D) des Hohlraums (22) in der axialen Richtung (RD) ist.

2. Press-Fitting nach Anspruch 1, wobei freie Enden (30, 31) des inneren und des äußeren Beins (20, 21) im Wesentlichen auf einer selben Höhe in der axialen Richtung (AD) liegen.

3. Press-Fitting nach Anspruch 1 oder 2, wobei das Wandteil (27) mit dem inneren oder äußeren Kontakt eine axiale Länge (L1) aufweist, welche kürzer als die (L2) des anderen Wandteils mit dem inneren oder äußeren Kontakt ist.

4. Press-Fitting nach Anspruch 3, wobei das Bein (20) von welchem das Wandteil (27) mit Kontakt die kürzere Länge (L1) aufweist, zumindest teilweise schmaler als das andere Bein (21) konstruiert ist.

5. Press-Fitting nach Anspruch 3 oder 4, wobei das Wandteil (28) mit Kontakt, welches die längere axiale Länge (L2) aufweist, eine axiale Länge (L2) aufweist, welche länger als die Tiefe (D) des Hohlraums (22) ist.

6. Press-Fitting nach einem der vorhergehenden Ansprüche, wobei freie Enden (30, 31) der Beine (20, 21) konvex bei Übergängen zwischen den Wandteilen (27, 28) mit Kontakt und dem Hohlraum (22) gekrümmt sind.

7. Press-Fitting nach einem der vorhergehenden Ansprüche, wobei der Hohlraum (22) einen zumindest teilweise konkav gekrümmten Wandabschnitt (25) umfasst.

8. Press-Fitting nach Anspruch 7, wobei ein Radius (R) des konkav gekrümmten Wandabschnitts (25) zwischen 0,8 - 1,5 mm liegt.

9. Press-Fitting nach einem der vorhergehenden Ansprüche, wobei der Hohlraum (22) einen geraden Wandabschnitt (24) entlang eines Teils von einem der Beine (20) umfasst, wobei sich der gerade Wandabschnitt (24) unter einem schiefen Winkel (α) relativ zu der radialen Richtung (RD) erstreckt, und wobei der gerade Wandabschnitt (24) insbesondere im Wesentlichen parallel zu einem äußeren geraden Wandteil (26) desjenigen Beins (20) liegt, welches sich auch unter einem schiefen Winkel (β) relativ zu der radialen Richtung (RD) erstreckt.

10. Press-Fitting nach einem der vorhergehenden Ansprüche, wobei ein Seitenwandteil (34) an einem Übergang zwischen dem ersten und dem zweiten Bein (20, 21) vorhanden ist, wobei sich das Seitenwandteil im Wesentlichen in der radialen Richtung (RD) erstreckt und zu dem Greifring (17) gerichtet ist.

11. Press-Fitting nach einem der vorhergehenden Ansprüche, wobei der Abstandsring (18) aus Messing, insbesondere aus Messing, welches Blei enthält, und besser aus Messing, welches ungefähr 2 % Blei enthält, hergestellt ist.

12. Verfahren zum Pressen eines Press-Fittings nach einem der vorhergehenden Ansprüche 1-11, die Schritte umfassend:
- Einführen eines Rohrendes (4) in den Einführungsraum der Fassung (1);
- plastisches Verformen des Pressbereichs (3) von einem nicht komprimierten Zustand in einen komprimierten Zustand, indem ein radial nach innen gerichteter Pressvorgang durch ein Presswerkzeug (40) ausgeübt wird, was bewirkt, dass das Presswandteil (10) radial komprimiert wird und der Greifring (17) das eingeführte Rohrende (4) ergreift, während der Dichtungsring (16) an dem eingeführten Rohrende (4) dichtend anliegt, wobei während des Verformens des Pressbereichs (3) das Querschnittsprofil des Abstandsrings (18) verformt wird, so dass die Wandteile (27, 28) mit dem inneren und äußeren Kontakt im Wesentlichen an dem eingeführten Rohrende (4) bzw. dem Presswandteil (10) zu liegen kommen, damit der Abstandsring (18) eine blockierende Wand innerhalb des Pressbereichs (3) ausbildet, indem er sich vollständig zwischen dem Rohrende (4) und dem Presswandteil (10) in dem komprimierten Zustand erstreckt.

## Revendications

1. Emmanchement destiné à des conduites, comprenant :
- un emboîtement (1) avec un espace d'insertion destiné à insérer une extrémité de conduit (4), l'espace d'insertion ayant une zone d'enfoncement (3) qui est délimitée par une partie de paroi d'enfoncement sensiblement cylindrique (10) ;
- un espace en forme de rainure annulaire (11) présent dans la partie de paroi d'enfoncement (10) ; et
- une bague d'étanchéité (16), une bague d'entretoise (18) et une bague de préhension (17) placée dans l'espace en fore de rainure annulaire (11),
dans lequel la zone d'enfoncement (3) est déformable plastiquement entre un état non comprimé et un état comprimé pendant une action de pression orientée radialement vers l'intérieur par un outil d'enfoncement (40) qui permet à la partie de paroi d'enfoncement (10) de se comprimer radialement et à la bague de préhension (17) d'attraper une extrémité de conduit insérée (4) pendant que la bague d'étanchéité (16) repose de manière étanche contre cette extrémité de conduit insérée (4), dans lequel la bague d'entretoise (18) possède un profil transversal sensiblement en forme de V avec un enjambement interne et un enjambement externe (20, 21) qui délimitent ensemble un creux (22) qui s'ouvre vers la bague d'étanchéité (16),
**caractérisé en ce que**
la bague d'entretoise (18) est une bague d'entretoise sans fin avec un corps en forme de bague sans fin qui est fermé dans la direction circonférentielle,
dans lequel l'enjambement interne (20) comprend :
- une partie de paroi de contact interne (27) qui s'étend dans une direction axiale (AD) et qui fait face à l'espace d'insertion,
dans lequel l'enjambement externe (21) comprend :
- une partie de paroi de contact externe (28) qui s'étend dans la direction axiale (AD) et qui fait face à la partie de paroi d'enfoncement sensiblement cylindrique (10) de l'emboîtement (1),
dans lequel les parties de paroi de contact interne et externe (27, 28) commencent sur le côté de la bague d'étanchéité (16) sensiblement à un même niveau dans la direction axiale (AD) et sont opposées l'une à l'autre au niveau des côtés opposés du creux (22),
dans lequel au moins l'une des parties de paroi de contact interne et externe (27) possède une longueur axiale (L1) égale ou inférieure à une profondeur (D) du creux (22) dans la direction axiale (AD).

2. Emmanchement selon la revendication 1, dans lequel les extrémités libres (30, 31) des enjambements interne et externe (20, 21) se trouvent sensiblement au même niveau dans la direction axiale (AD).

3. Emmanchement selon la revendication 1 ou 2, dans lequel la partie de paroi de contact interne ou externe (27) possède une longueur axiale (L1) inférieure à l'autre (L2) des parties de paroi de contact interne et externe (28).

4. Emmanchement selon la revendication 3, dans lequel l'enjambement (20) dont la partie de paroi de contact (27) possède la longueur la plus courte (L1) est au moins partiellement construite de manière plus effilée que l'autre enjambement (21).

5. Emmanchement selon la revendication 3 ou 4, dans lequel la partie de paroi de contact (28) qui possède la longueur axiale la plus longue (L2) possède une longueur axiale (L2) supérieure à la profondeur (P) du creux (22).

6. Emmanchement selon l'une des revendications précédentes, dans lequel les extrémités libres (30, 31) des enjambements (20, 21) sont incurvées de manière convexe au niveau des transitions entre les parties de paroi de contact (27, 28) et le creux (22).

7. Emmanchement selon l'une des revendications précédentes, dans lequel le creux (22) comprend une section de paroi au moins partiellement incurvée de manière concave (25).

8. Emmanchement selon la revendication 7, dans lequel un rayon (R) de la section de paroi incurvée de manière concave (25) est comprise entre 0,8 et 1,5 mm.

9. Emmanchement selon l'une des revendications précédentes, dans lequel le creux (22) comprend une section de paroi droite (24) le long d'une partie de l'un des enjambements (20), ladite section de paroi droite (22) s'étendant à un angle oblique (α) par rapport à la direction radiale (RD), et ladite section de paroi droite (24) étant en particulier sensiblement parallèle à une partie de paroi droite externe (36) dudit enjambement (20) qui s'étend également à un angle oblique (β) par rapport à la direction radiale (RD).

10. Emmanchement selon l'une des revendications précédentes, dans lequel une partie de paroi latérale (34) est prévue au niveau d'une transition entre le premier et le second enjambements (20, 21), ladite partie de paroi latérale s'étendant sensiblement dans la direction radiale (RD) et faisant face à la bague de préhension (17).

11. Emmanchement selon l'une des revendications précédentes, dans lequel la bague d'entretoise (18) est composée de cuivre, et en particulier de cuivre contenant du plomb, et en particulier de cuivre contenant environ 2% de plomb.

12. Procédé d'enfoncement d'un emmanchement selon l'une des revendications précédentes 1 à 11, comprenant les étapes consistant à :
- insérer une extrémité de conduit (4) dans l'espace d'insertion de l'emboîtement (1) ;
- déformer plastiquement la zone d'enfoncement (3) entre un état non comprimé et un état comprimé par une action de pression orientée radialement vers l'intérieur exercée par un outil d'enfoncement (40) qui permet à la partie de paroi d'enfoncement (10) de se comprimer radialement et à la bague de préhension (17) d'attraper l'extrémité de conduit insérée (4) pendant que la bague d'étanchéité (16) repose de manière étanche contre l'extrémité de conduit insérée (4), dans lequel, pendant la déformation de la zone d'enfoncement (3), le profil transversal de la bague d'entretoise (18) se déforme de sorte que les parties de paroi de contact interne et externe (27, 28) se retrouvent sensiblement contre l'extrémité de conduit insérée (4) et la partie de paroi d'enfoncement (10), respectivement, de sorte que la bague d'entretoise (18) forme une paroi de blocage dans la zone d'enfoncement (3) en s'étendant en entier entre l'extrémité de conduit (4) et la partie de paroi d'enfoncement (10) dans l'état comprimé.
